# EUROPEAN PATENT APPLICATION

(11) **EP 1 561 382 A2**
(43) Date of publication of application: **10.08.2005**
(21) Application number: 05075301.1
(22) Date of filing: 07.02.2005
(51) Int. Cl.: A23B 7/06, A23B 7/04, A23B 7/05

(54) **Method for preparing deep-frozen leaf vegetables and device suitable for carrying out the same**

(30) Priority: 06.02.2004 NL 1025421
(71) Applicant: Flaminex bvba, 8970 Poperinge (BE)
(72) Inventor: Degrijse, Conny, 8970 Poperinge (BE)
(74) Representative: Dohmen, Johannes Maria Gerardus

(57) **Abstract**

The invention relates to a method for preparing deep-frozen leaf vegetables, wherein the leaf vegetables are washed, blanched and deep-frozen. It is an object of the present invention to provide a method for preparing deep-frozen leaf vegetables wherein the moisture content of the end product can be precisely controlled within certain bounds.

## Description

The present invention relates to a method for preparing deep-frozen leaf vegetables, wherein the leaf vegetables are washed, blanched and deep-frozen.

Leaf vegetables, such as spinach, are harvested during a particular period of the year. Fresh spinach is delivered to the greengrocer, for example, after which the consumer prepares the spinach himself at home, in particular by washing it and subsequently cooking it in a pan. This is what is referred to as preparing fresh vegetables. Consumers wish to eat vegetables outside the harvesting season as well, however, in which case they have to turn to so-called deep-frozen vegetables. The current technique of preparing deep-frozen vegetables has progressed so far that the loss of minerals and other food components is minimized. According to the well-known "Bonduelle" process, the time between harvesting and processing is maximally four hours. After the leaf vegetables have been delivered at the factory, any solid matter present therein, such as adhering earth, stones and the like are removed by washing and the use of vibratory chutes. Following that, the washed leaf vegetables are blanched so as to deactivate the enzymes that are present, as a result of which the storage life of the product is extended. After blanching, the leaf vegetables are quickly deep-frozen at a temperature of about -30 °C, after which the deep-frozen vegetables are transported to a freeze-storage space, in which a temperature of about -18 °C prevails. Finally, the deep-frozen leaf vegetables are metered and placed in bags or cardboard boxes, and the final date of consumption (the expiry date) is put on the package. The end product thus packaged is stored in warehouses, in which a temperature of about -18 °C is maintained, from where it is transported to the outlets.

A method for preparing deep-frozen leaf vegetables is also known from European patent application No. 0 768 037, wherein the leaf vegetables, once washed and blanched, are introduced into a water bath in which the spinach leaves will float on the water surface, being spread over said water surface through the use of compressed air. The compressed air is supplied at the bottom side of the water bath. A weighing system arranges for the spinach leaves thus spread to be placed in a thin layer on a conveyor belt, and the spinach is dried by supplying air at the bottom side of the conveyor belt, after which the layer of dried spinach leaves is passed through a cooling space fitted with a spiral cooler.

From German Offenlegungsschrift DE 19 927 273 there is known a method for preparing deep-frozen leaf vegetables, wherein the leaf vegetables are washed, blanched, quickly cooled down and subsequently deep-frozen. The blanching method comprises contacting the leaf vegetables with water at a temperature between 70 °C and 140 °C for at least two seconds, with the water being washed with an inert gas, preferably nitrogen gas, prior to or during said blanching. Further details with regard to the refrigerating process cannot be derived therefrom.

From US patent No. 3,734,751 there is known a method for preparing deep-frozen leaf vegetables, wherein the leaf vegetables are reduced, the solid matter content of the reduced leaf vegetables is increased by partial dewatering, and subsequently the leaf vegetables that have been treated in this way are formed into small particles, after which the small particles are first frozen at the surface and subsequently subjected to a deep-freezing process. Said partial dewatering is carried out by centrifuging and said quick cooling down is carried out by means of a flow of cold air.

The aforesaid processes have this drawback that generally so-called rotary coolers are used for quickly cooling the blanched leaf vegetables, with ammonia being used as the coolant. Such rotary coolers comprise a coupling to make it possible to supply ammonia, which coupling may exhibit leakage caused by said rotation. For health reasons, such leakage of ammonia is highly undesirable.

Another drawback of the above-described processes is the fact that the moisture content of the end product depends on the moisture content of the leaf vegetables that are used as the starting material, in particular the spinach that is harvested from the land. Practice teaches that the moisture content of the leaf vegetables depends on the season, which means that the moisture content is subject to variation during the harvesting season. Such a variation is undesirable, because it has an adverse effect on the taste and the quality of the end product.

It is an object of the present invention to provide a method and a device for preparing deep-frozen leaf vegetables wherein the moisture content of the end product can be precisely controlled within certain bounds.

Another object of the present invention is to provide a method and a device for preparing deep-frozen the leaf vegetables wherein no use is made of a rotary cooler that uses ammonia as a coolant.

Yet another object of the present invention is to provide a method and a device for preparing deep-frozen leaf vegetables wherein a coolant that is considered to be safe from an environmental and sanitary point of view is used.

According to the invention, the present method is characterized in that it comprises the following steps:
i) blanching the leaf vegetables,
ii) cooling down the blanched leaf vegetables of step i),
iii) adding ice to the cooled-down leaf vegetables of step ii),
iv) forming separate units from the leaf vegetables obtained in step iii), and
v) deep-freezing the units obtained in step iv).

One or more of the aforesaid objects are accomplished by carrying out the above-described steps i)-v), in which connection especially step iii) is worth mentioning. In principle, the addition of ice serves a dual purpose, viz. cooling down the already cooled-down leaf vegetables of step ii) even further and controlling the dry matter content of the end product obtained after step v). To obtain a maximally homogeneous mixing of the added ice and the leaf vegetables, it is desirable to add ice in ground condition. The process of grinding ice into flakes is a technique that is known per se and need not be explained in more detail herein, therefore. The ice may be obtained from excess water from the same process or from a different process. In a special embodiment, step iii) can be supported by exposing the leaf vegetables to a cold air flow. Step v) is a usual step, which is carried out by means of a spiral cooler, for example. It is usual to screen and wash the leaf vegetables and remove undesirable solid matter prior to the blanching of step i). Examples of leaf vegetables that can be treated with the present method and device are spinach and endive, but also potatoes. In the case of potatoes, in particular the french fries industry must be considered, in which potatoes that have been cut into strips are processed in accordance with the present method, wherein, in a special embodiment of the present method, step i) can be left out. Although the term leaf vegetables is consistently used in the present description for the sake of simplicity, it will be apparent to those skilled in the art that this term also includes potatoes, in particular potatoes that have been cut into strips.

In a special embodiment it is desirable to measure the temperature of the cooled-down leaf vegetables during step ii), wherein in particular the temperature measured in step ii) provides a signal by means of which the metering of the addition of ice according to step iii) can be adjusted. A temperature measurement carried out in this manner ensures that precisely that amount of ice required for reaching the desired cooling temperature is supplied, the metering of the addition of ice according to step iii) being carried out in such a manner that the dry matter content of the product obtained after step v) will range between 4 and 12 wt.% of dry matter, in particular between 6 and 8 wt.% of dry matter. The addition of ice according to step iii) is also determined by the amount of cooled-down leaf vegetables, so that it is also desirable to carry out a weight and/or flow rate measurement of the leaf vegetables. The signal obtained from such a measurement is processed, in particular via a process controller, together with that from the aforesaid temperature measurement, so that the metering of ice according to step iii) will take place in a controlled manner. Thus the dual function of the addition of ice is optimally performed.

If excess melt water remains after the addition of ice to the cooled-down leaf vegetables of step ii), it is desirable in a specific embodiment to have step iv) preceded by a melt water removing step, in particular a compression step for squeezing the melt water from the leaf vegetables. The melt water may be reused in the same process or in a different process, for example for the preparation of ice, or as washing water. In addition to that, the water may also be used for glazing the vegetables. Moreover, in a special embodiment of the present method, the water thus obtained can be used for preparing coloured ice or for providing the vegetables with a coloured glaze.

The use of small ice crystals in the leaf vegetables is in particular desirable because it is easier in such an embodiment to form separate units from the intermediary product. Since the temperature of the product is measured in during step ii), it is known to what extent the added ice will melt and to what extent the ice will settle in the end product as residue, which residue will influence the final dry matter content of the product. Because part of the added ice will melt during step iii), a temperature below 0 °C will prevail at all times. To those skilled in the art it will be apparent that the temperatures will be checked and measured at the usual places during the entire deep-freezing process.

Because ice is added in step iii) to the cooled-down leaf vegetables of step ii), one or more additives, in particular selected from the group consisting of herbs, spices, thickeners, milk-derived products, preservation agents and aromatic and colouring substances, or a combination thereof, can be added to the ice. The additives thus added will spread homogeneously over the leaf vegetables, resulting in an intense mixing, which is desirable.

The present invention further relates to a device for preparing deep-frozen leaf vegetables, in particular spinach, comprising means for washing, blanching and deep-freezing as well as the piping, conveyor belts and pumps required for that purpose, which device is characterized in that an element for supplying ice is disposed after said blanching means, which element meters ice to the product as obtained after blanching and cooling.

Such a device furthermore comprises means for measuring the temperature of the cooled-down leaf vegetables, with the temperature thus measured providing a signal by means of which the metering of the addition of ice according to step ii) is adjusted. In addition, the device is preferably provided with an element for determining the weight and/or the flow rate of the leaf vegetables, so that the metering of ice according to step ii) will take place in an optimum manner via a measurement and control system that utilises the temperature signal of the cooled-down leaf vegetables and/or the signal of the weight and/or flow rate measurement of the leaf vegetables.

## Claims

1. A method for preparing deep-frozen leaf vegetables, wherein the leaf vegetables are washed, blanched and deep-frozen, **characterized in that** the method comprises the following steps:
i) blanching the leaf vegetables,
ii) cooling down the blanched leaf vegetables of step i),
iii) adding ice to the cooled-down leaf vegetables of step ii),
iv) forming separate units from the leaf vegetables obtained in step iii), and
v) deep-freezing the units obtained in step iv).

2. A method according to claim 1, **characterized in that** the temperature of the cooled-down leaf vegetables is measured during step ii).

3. A method according to claim 2, **characterized in that** the temperature measured in step ii) provides a signal by means of which the metering of the addition of ice according to step iii) can be adjusted.

4. A method according to any one or more of the claims 1-3, **characterized in that** the leaf vegetables obtained after step ii) are subjected to a weight and/or flow rate measurement so as to provide a measuring signal by means of which the metering of the addition of ice according to step iii) can be adjusted.

5. A method according to any one or more of the preceding claims 1-4, **characterized in that** the metering of the addition of ice according to step iii) is controlled on the basis of a combination of the temperature measurement and the weight and/or flow rate measurement.

6. A method according to any one or more of the preceding claims, **characterized in that** the metering of the addition of ice according to step iii) is carried out in such a manner that the dry matter content of the product obtained after step v) will range between 4 and 12 wt.% of dry matter.

7. A method according to claim 6, **characterized in that** said dry matter content ranges between 6 and 8 wt.%.

8. A method according to any one or more of the preceding claims, **characterized in that** step iv) is preceded by a compression step, in which the product obtained after step iii) is cleared of excess melt water.

9. A method according to any one or more of the preceding claims, **characterized in that** one or more additives are added to the ice.

10. A method according to claim 9, **characterized in that** the additives have been selected from the group consisting of herbs, spices, thickeners, milk-derived products, preservation agents and aromatic and colouring substances, or a combination thereof.

11. A method according to any one or more of the preceding claims 1-10, **characterized in that** spinach is used as the leaf vegetable.

12. A method according to any one or more of the claims 1-10, **characterized in that** potatoes, especially potatoes that have been cut into strips, are used instead of leaf vegetables.

13. A method according to any one or more of the claims 8-12, **characterized in that** the excess melt water is used for preparing ice as used in step iii).

14. A method according to any one or more of the claims 8-12, **characterized in that** the excess melt water is used for glazing leaf vegetables.

15. A device for preparing deep-frozen leaf vegetables, comprising means for washing, blanching and deep-freezing as well as the piping, conveyor belts and pumps required for that purpose, **characterized in that** an element for supplying ice is disposed after said blanching means, which element meters ice to the product as obtained after blanching and cooling.
